Europäisches Patentamt

(19) European Patent Office

Office européen des brevets

(11) Publication number: **0 144 862**
**B1**

## (12) EUROPEAN PATENT SPECIFICATION

(45) Date of publication of patent specification: **06.09.89**

(21) Application number: **84114085.8**

(22) Date of filing: **22.11.84**

(51) Int. Cl.⁴: **G 11 B 5/127,** G 11 B 5/31, G 11 B 5/187 // G11B5/255

(54) Magnetic head for perpendicular magnetic recording system.

(30) Priority: **30.11.83 JP 227728/83**

(43) Date of publication of application:
**19.06.85 Bulletin 85/25**

(45) Publication of the grant of the patent:
**06.09.89 Bulletin 89/36**

(84) Designated Contracting States:
**DE FR IT NL**

(56) References cited:
**DE-A-3 231 286**
**FR-A-2 380 985**

**PATENTS ABSTRACTS OF JAPAN, vol. 8, no. 18 (P-250)1455r, 26th January 1984; & JP-A-58 177 511 (ALPS DENKI K.K.) 18-10-1983**

**PATENTS ABSTRACTS OF JAPAN, vol. 9, no. 109 (P-355)1832r, 14th May 1985; & JP-A-59 229 721 (MATSUSHITA DENKI SANGYO K.K.) 24-12-1984**

(73) Proprietor: **Kao Corporation**
**14-10, Nihonbashi Kayabacho 1-chome**
**Chuo-Ku Tokyo 103 (JP)**

(72) Inventor: **Kishine, Nobuyuki**
**2990-6 Ishiicho**
**Utsunomiya-shi Tochigi (JP)**
Inventor: **Imamura, Tetsuya**
**2990-6 Ishiicho**
**Utsunomiya-shi Tochigi (JP)**
Inventor: **Minami, Hideyuki**
**2606-6 Akabane Hagagun Ichikaimachi**
**Tochigi (JP)**

(74) Representative: **Dipl.-Ing. H. Marsch Dipl.-Ing. K. Sparing Dipl.-Phys.Dr. W.H. Röhl Patentanwälte**
**Rethelstrasse 123**
**D-4000 Düsseldorf 1 (DE)**

Courier Press, Leamington Spa, England.

**Description**

Technical Fields

This invention relates to a magnetic head which records in and reads out of a magnetic memory medium and, more particularly to a magnetic head used in a perpendicular magnetic recording system which records a plane magnetic recording medium having an axis of easy magnetization vertical to the plane with a vertical magnetic field component.

Prior Art

Perpendicular magnetic recording systems like the one mentioned above and longitudinal recording systems represent currently available magnetic recording systems. The longitudinal recording system has been theoretically proven to have a limitation in high density recording. (S. Iwasaki, Gakkai Jiki Kiroku Kenkyu Shiryo MR 72—7, 1972.6 and S. Iwasaki & K. Takamura, IEEE tras. On Magn. MAG—11, No. 5, pp. 1173—1175, 1980)

In recent years research and development activities are concentrated on the perpendicular magnetic recording system which is the recording system for magnetization vertically to the plane and is suitable for high density recording.

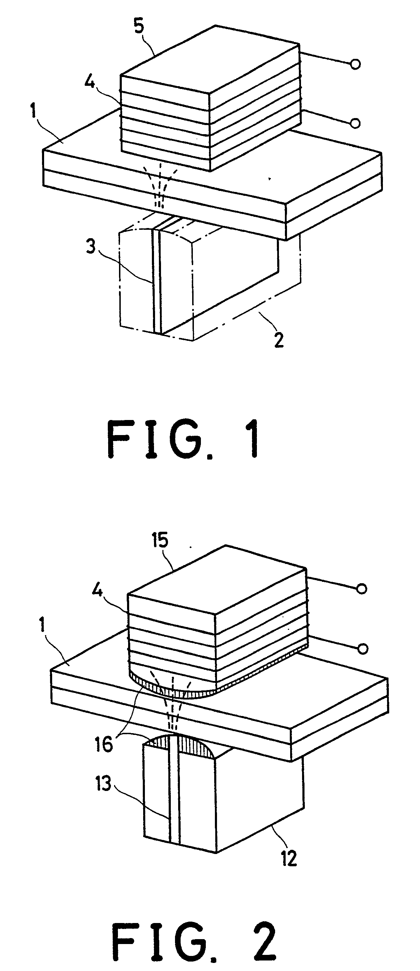

Fig. 1 is a perspective view of the structure of a prior art magnetic head used in a perpendicular magnetic recording system. The prior art magnetic head comprises a main pole 3 support by a support 2 which vertically contact the surface of a magnetic recording medium 1 and an auxiliary pole 5 having a coil 4 on the outer periphery which does not contact the magnetic recording medium.

The main pole 3 directly contacts the magnetic recording medium and generally comprises a thin film of magnetic soft metal such as Permalloy, Alperm, Sendust or Borocube and a support 2 for protecting the thin film which is made of thermoplastic resin, thermosetting resin or alumina ceramics.

The auxiliary pole 5 is disposed to oppose the main pole 3 via the magnetic recording medium and is frequently made sintered manganese-zinc-ferrite. Although this auxiliary pole 5 should not directly contact the magnetic recording medium 1, it is preferable in design to arrange the pole 5 as close as possible to the medium 1 for the convenience in recording and reproduction. This necessitates a minute gap between the auxiliary pole 5 and the magnetic recording medium 1, but if such a gap is provided due to the deflection and strain on the recording medium 1 or uneven thickness of individual recording medium 1, the auxiliary pole 5 is likely to contact the recording medium 1, thus presenting a problem.

Objects of the Invention

This invention aims to obviate aforementioned defects of prior art and to provide a magnetic head for a perpendicular magnetic recording system which does not require minute gaps between a magnetic recording medium and an auxiliary pole and yet superior in performance.

Features of the Invention

This invention relates to a magnetic head which can be used for the perpendicular magnetic recording system which records with a vertical magnetic filed component a magnetic recording medium in a plane form having an axis of easy magnetization which is vertical to the plane and comprises a main pole including a soft magnetic thin film and an auxiliary pole disposed to oppose the main pole via said magnetic recording medium, the magnetic head being characterized by the structure wherein at least the portion of said auxiliary pole surface which is close to said magnetic recording medium is covered with a thin film surface of non-magnetic member including glasslike carbon material.

Glasslike carbon is known per se for a long time, see e.g. DCJC Report 68—2, Review of Glasslike Carbons, Bettelle Memorial Institute 1968. This document provides no suggestion that such a glasslike carbon could be used as a surface material for a magnetic head.

The film surface is made of an aggregate of glasslike carbon materials and/or an aggregate of composite material of mainly glasslike carbon materials and shaped in a manner to increase the thickness in cross section at substantial center of the surface opposing the magnetic recording medium in the direction parallel to the advancing direction of the medium and to have the maximum thickness at 3—20 μm.

More specifically, the feature of this invention lies in that either the whole auxiliary pole or a portion thereof closest to the magnetic recording medium is made of an aggregate of glasslike carbon materials and/or an aggregate of composite material including vitreous carbon materials. If such an auxiliary pole is used, even if the auxiliary pole contacts the magnetic recording medium, there will be no problems in magnetic recording and reproducing. As the recording medium is less likely to have damages, there are required no special efforts to be paid for minute gap formation.

The term an aggregate of glasslike carbon materials and/or an aggregate of composite material as used herein means an aggregate in the form molded by case molding, compression molding, extrusion molding or any other well knwon molding methods or in the formation wherein a glasslike carbon material is directly precipitated on the surface of substrate by sputtering, vapor deposition, etc.

This invention will now be explained in more detail. In the magnetic head of the perpendicular magnetic recording system according to this invention, either the whole of an auxiliary pole or the portion thereof which is closest to a magnetic recording medium is structured with an aggregate of glasslike carbon materials and/or an aggregate of composite material including vitreous carbon materials.

The glasslike carbon materials include a glasslike carbon material obtained by carbonating thermosetting resin, a glasslike carbon material obtained by carbonating the resin which is modified to be thermoset by copolymerization or cocondensation, a glasslike carbon material obtained by a chemical process in setting or carbonization for remarkably preventing crystallization, or the glasslike carbon material obtained by thermal decomposition of methane, ethylene, benzene or other low molecular weight carbon hydrates in gas phase, and more specifically, they may be a glasslike carbon material of polyacrylonitrile origin, of rayon origin, of pitch origin, of lignin origin, of phenol origin, of furan origin, of alkyd resin origin, of unsaturated polyester origin, or of xylene resin origin.

The aggregate of composite materials including glasslike carbon materials as used herein means the aggregate of composite materials including aforementioned glasslike carbon material and a synthetic resin and/or a carbon filler. The synthetic resin may be thermoplastic resins such as PVC, polyvinyl acetate, polystyrene or thermosetting resins such as phenol, epoxy, polyester, furan, urea, malamine, alkyd, xylene. The carbon filler as used herein means general carbon materials and may be, for example, a natural substance with high residual carbon content such as lignin or pitches, an artificial graphite obtained by sintering thermoplastic resins, carbon black made by the furnace method or the impact method or naturally available graphite.

As said thermosetting resin acts as a binder for fixing glaslike carbon materials or vitreous carbon materials with a carbon filler, the aggregate of composite materials of such thermosetting resin becomes superior in strength and rigidity against impact or other mechanical destructions. The thermosetting resins are therefore preferable to thermoplastic resins. In the case where a thermosetting resin is carbonized to obtain a glasslike carbon material, carbonization will be easily performed is said carbon filler is added to the thermosetting resins. However, as the aggregate material becomes uneven if a large amount of synthetic resin or carbon filler is mixed with glasslike carbon, it is desirable to set the ratio of glasslike carbon material against the whole volume of aggregate material at 40 volume % or higher, or preferably at 50 volume% or higher.

The aggregate of glasslike carbon materials and/or aggregate of composite materials including glasslike carbon materials may be manufactured by case molding, compression molding, extrusion molding or any other known molding methods.

If the whole of auxiliary pole is structured with an aggregate of glasslike carbon materials and/or an aggregate of composite materials including glasslike carbon material, the aggregate molded by aforementioned molding method may be cut out in a desired shape and dimension and may be ground on the surface thereof. If only the portion closest to the magnetic recording medium is structured with an aggregate of glasslike carbon materials and/or an aggregate of composite materials including glasslike carbon materials, such materials may be formed by sputtering or evaporation process on any desired face of a manganese-zinc-ferrite block or such a block of aggregate materials may be cut out, shaved, and ground to achieve a predetermined shape and dimension, and then adhered.

The gap between an auxiliary pole and a magnetic recording medium is generally 10—20 μm. Considering recording and reproducing efficiency, the smaller the gap is, the better it is. But the contact between the auxiliary pole and the magnetic recording medium should absolutely be avoided. Accordingly, it is a usual practice to set the gap at 10—20 μm. The glasslike carbon material aggregate according to this invention is extremely effective in this regard as it can be formed as an extremely thin film by sputtering or other methods, it is not magnetic, it does not damage the recording medium even if it contacts the medium, and it is superior in abrasion resistance.

Although the portion closest to a recording medium alone is covered with the material in preferred embodiments, the whole of an auxiliary pole may be covered if it is more convenient in manufacture.

Effects of the Invention

The magnetic head for the perpendicular magnetic recording system according to this invention does not require provision of a minute gap between a magnetic recording medium and an auxiliary pole and does not damage the magnetic recording medium nor causes any problems in recording/reproducing even if it contacts the medium. These advantageous features are attributable to the non-magnetic property of the aggregate of glasslike carbon materials and/or the aggregate of composite materials including glasslike carbon materials and the lubrication property thereof with the magnetic recording medium.

As the magnetic head according to this invention is superior in erosion resistance and chemical stability, it has a longer durability. If either the whole of the support of the main pole or the portion contacting the magnetic recording medium is structured with the aggregate of glasslike carbon materials and/or the aggregate of composite materials including glasslike carbon materials, uneven abrasion will not occur on the magnetic head because a magnetic head made of the same material aggregate contacts with the whole surface of the magnetic recording medium. This is another merit.

Brief Description of Drawings

Fig. 1 is a perspective view of a magnetic head for prior art perpendicular magnetic recording system.

Fig. 2 is a perspective view of the structure of the magnetic head for perpendicular magnetic recording system according to this invention wherein the thickness of a film surface is somewhat exaggerated.

In the figure, the reference numeral 1 denotes a magnetic recording medium, 2, 12 supports, 3, 13 main poles, 4 a coil, 5, 15 auxiliary poles, and 16 a film surface of glasslike carbon material aggregate.

Preferred Embodiments

In order to show specific examples of the magnetic head for a perpendicular magnetic recording system according th this invention, the invention will now be described in more detail referring to preferred embodiments. The embodiments hereinbelow are shown only as examples and by no means intended to limit the technical scope of this invention.

Embodiment 1:

Fig. 2 shows the structure in perspective of the magnetic head according to this invention. The magnetic head of this invention comprises a main pole 13 of thin Permalloy film which is supported by a support 12 made of alumina ceramics vertically contacting the surface of a magnetic recording medium 1 and which has a film surface 16 of a glasslike carbon material aggregate on the surface contacting the magnetic recording medium 1 and an auxiliary pole 15 which has a film surface 16 of a glasslike carbon material aggregate in the form of an arc on the surface contacting said magnetic recording medium 1 and which is formed with sintered manganese-zinc-ferrite.

The magnetic head was manufactured by processing a sintered manganese-zinc-ferrite of the size 1 mm × 1 mm × 4 mm at one end thereof with emery paper to obtain an arc having 60 mm radius curvature. An aggregate of glasslike carbon material (having 1.49 apparent specific gravity, 112 in Shore hardness and 3 kcal/mhr in thermal conductivity) was formed by sputtering on the arc surface in ca. 5 μm thickness. Permalloy thin film is supported with alumina ceramics (manufactured by Nippon Denki Glass Kabushiki Kaisha; the product name NeoCerum) and said glasslike carbon material aggregate of form a main pole. The glasslike carbon material was used only for the portion contacting directly with the magnetic recording medium.

Fe-Ni film was formed by sputtering in the thickness of 0.5 μm on both surfaces of polyethylene terephthalate film of 50 μm thickness and Co-Cr film was further sputtered thereon in the thickness of 0.5 μm to prepare discs of 20 KBPI (kilo bits/inch).

Said auxiliary pole, main pole and disc were disposed in a manner so that the auxiliary pole and the main pole contact respective surfaces of a disc as shown in fig. 2 (contact load; ca. 20 g).

The disc was run from 500,000 times and the reduction of reproducing output, the degree of abrasion on the auxiliary pole and the extent of damages on the disc surface on which the auxiliary pole contact were assessed. The results are listed in the table hereinbelow.

Embodiment 2:

Instead of the glasslike carbon material aggregate used in the first embodiment, an aggregate of composite materials was prepared by mixing 10 volume % of carbon black powder (average size: 0.10 μm) and 90 volume % of thermosetting resin comprising furfuryl alcohol, formalin, phenol, hardening and carbonizing the same. Such aggregate of composite materials was used on the tip end of the auxiliary pole and tested in the same manner as above mentioned in Embodiment 1. The results are listed on the table.

Comparative Embodiment

An auxiliary pole was prepared by cutting out alumina ceramics (by Nippon Denki Glass Kabushiki Kaisha; the product name, Neocerum), and processing it with emery paper to form an arc of ca. 5 μm in thickness and 60 μm in radius curvature to replace the glasslike carbon material aggregate used above. Thus obtained arc was attached on the tip of one end of sintered manganese-zinc-ferrite with an adhesive agent (Araldite available from Ciba Geigy) to form an auxiliary pole. The test was conducted in the same manner as above. Results are shown in the table.

Comparative Embodiment 2:

Polymethylmethacrylate was dissolved in a solvent mixture of ethanol/carbon tetrachloride (mix ratio by weight: 1:1) in place of an aggregate of glasslike carbon materials used in Embodiment 1, and the solution was applied on one end of the same sintered manganese-zinc-ferrite as used in the first embodiment and the solvent was removed to form a polymethyl methacrylate film of ca. 5 μm thickness as an auxiliary pole. The test was conducted in the same manner as in the first embodiment. Results are shown in the table.

Comparative Embodiment 3:

Telfon was used instead of the glasslike carbon material aggregate of Embodiment 1. Although use on the tip of an auxiliary pole was tried, Teflon did not adhere to sintered manganese-zinc-ferrite. Teflon was then cut out into a square column of 1 mm(h) × 1 mm(w) × 5 mm(1) which was processed with emery paper to obtain an arc of 60 mm radius curvature. The test was conducted in the same manner as above to measure the degree of abrasion on the auxiliary pole and the extent of damages on the disc surface contacting the auxiliary pole. The results are shown in the table.

## EP 0 144 862 B1

### TABLE

| Magnetic head | reduction in reproduction output (dB) | abrasion on auxiliary pole (µm) | degree of damages on magnetic recording medium |
|---|---|---|---|
| embodiment 1 | 0 | 1.0 | none |
| embodiment 2 | 0 | 1.0 | none |
| comparative embodiment 1 | 0 | 0 | Co-Cr sputtering film became peeled excessively |
| comparative embodiment 2 | 0 | 3.2 | Resin was adhered and Co-Cr sputtered film became peeled. |
| comparative embodiment 3 | — | 3.4 | Resin was adhered and Co-Cr sputtered film became peeled. |

### Claims

1. A magnetic head for a perpendicular magnetic recording system which records with a vertical magnetic filed component a magnetic recording medium (1) of a plane surface having a receiving circuit axis for easy magnetization which is vertical to the plane comprising a main pole (13) including a soft magnetic thin film having a high magnetic permeability and a high saturated magnetic flux density, and an auxiliary pole (15) which is disposed to oppose said main pole (13) via said magnetic recording medium (1), characterized in that at least the portion of the surface of said auxiliary pole (15) contacting said magnetic recording medium (1) is covered with a non magnetic film surface (16) including glasslike carbon material.

2. The magnetic head according to claim 1, characterized in that the material of the film surface (16) is an aggregate of glasslike carbon materials.

3. The magnetic head according to claim 2, characterized in that the material of the film surface (16) is an aggregate of composite material mainly of glasslike carbon materials.

4. The magentic head according to one of the claims 1 to 3, characterized in that the film surface (16) is shaped on the side opposing the magnetic recording medium (1) in a manner to increase the thickness thereof at the center in cross section parallel to the advancing direction of the magnetic recording medium (1) and the maximum thickness thereof is 3 to 20 µm.

### Patentansprüche

1. Magnetkopf für ein magnetisches Senkrecht-Aufzeichnungssystem, das mit einer vertikalen Magnetifeldkomponente auf einem magnetischen Aufzeichnungsmedium (1) mit einer planen Oberfläche aufweichnet, die eine Empfangskreisachse zur leichten Magnetisierung aufweist, die vertikal zu der Ebene verläuft, umfassend einen Hauptpol (13), der einen weichmagnetischen dünnen film einschließt, der eine hohe magnetische Permeabilität und eine hochgesättigte magnetische Flußdichte aufweist, und einen Hilfspol (15), der angeordnet ist, um über das besagte magnetische Aufzeichungsmedium (1) dem besagten Hauptpol (13) gegenüberzuliegen, dadurch gekennzeichnet, daß wenigstens der Teil der Oberfläche des besagten Hilfspols (15), der das besagte magnetische Aufzeichnungsmedium (1) berührt, mit einer nichtmagnetischen Filmfläche (16), die ein glasartiges Kohlenstoffmaterial umfaßt, bedeckt ist.

2. Magnetkopf nach Anspruch 1, dadurch gekennzeichnet, daß das Material der Filmfläche (16) ein Aggregat aus glasartigen Kohlenstoffmaterialien ist.

3. Magnetkopf nach Anspruch 2, dadurch gekennzeichnet, daß das Material der Filmfläche (16) ein Aggregat aus Kompositmaterial hauptsächlich aus glasartigen Kohlenstoffmaterialien ist.

4. Magnetkopf nach einem der Ansprüche 1 bis 3, dadurch gekennzeichnet, daß die Filmfläche (16) auf der Seite, die dem magnetischen Aufzeichnungsmedium (1) zugewandt ist, so geformt ist, daß die Dicke hiervon am Zentrum im Querschnitt parallel zu der Vorschubrichtung des magnetischen Aufzeichnungsmedium (1) erhöht ist, wobei die maximale Dicke hiervon 3 bis 20 µm ist.

**Revendications**

1. Une tête mangétique pour un système d'enregistrement magnétique perpendiculaire qui effectué un enregistrement avec une composante de champ mangétique verticale sur un moyen d'enregistrement magnétique (1) de surface plane comportant un axe de circuit de réception pour magnétisation aisée qui est vertical par rapport au plan, comprenant un pôle principal (13) pourvu d'un film mince magnétique doux ayant une grande perméabilité magnétique et une grande densité de flux magnétique saturé, ainsi qu'un pôle auxiliaire (15) qui est placé en regard dudit pôle principal (13) par l'intermédiaire dudit moyen d'enregistrement magnétique (1), caractérisée en ce qu'au moins la partie de la surface dudit pôle auxiliaire (15) qui est un contact avec ledit moyen d'enregistrement de champ magnétique (1) est recouverte d'un film superficiel non-magnétique (16) contenant une matière carbonée analogue à du verre.

2. La tête magnétique selon la revendication 1, caractérisée en ce que la matière du film superficiel (16) est un agrégat de matières carbonées analogues à du verre.

3. La tête magnétique selon la revendication 2, caractérisée en ce que la matière du film superficiel (16) est un agrégat de matières composites, formé principalement de matières carbonées analogues à du verre.

4. La tête magnétique selon une des revendications 1 à 3, caractérisée en ce que le film superficiel (16) est profilé, sur le côté placé en regard du moyen d'enregistrement magnétique (1), de manière à augmenter son épaisseur au centre d'une section droite parallèle à la direction d'avancement du moyen d'enregistrement magnétique (1), et son épaisseur maximale est comprise entre 3 et 20 µm.

5

4

1

3

2

# FIG. 1

15

4

1

16

13

12

# FIG. 2